# EUROPÄISCHE PATENTANMELDUNG

(11) **EP 3 073 260 A1**
(43) Veröffentlichungstag der Anmeldung: **28.09.2016**
(21) Anmeldenummer: 15161443.5
(22) Anmeldetag: 27.03.2015
(51) Int. Cl.: G01N 31/16

(54) **Verfahren und Vorrichtung zur kolorimetrischen Titration für die Stickstoffbestimmung**

(71) Anmelder: Büchi Labortechnik AG, 9230 Flawil (CH)
(72) Erfinder: Keller, Gerold, 8370 Sirnach (CH); Buffler, Michaela, 9242 Oberuzwil (CH); Mühleis, Andrea, 9000 St. Gallen (CH); Fitze, Ernst, 9225 Wilen-Gootshaus (CH); Nisple, Marc Alain, 8906 Winterthur (CH)
(74) Vertreter: Hepp Wenger Ryffel AG

(57) **Zusammenfassung**

Die Erfindung betrifft ein Verfahren zur Titration umfassend die Schritte Zugeben eines Titrationsmittels zu einer Titrationslösung umfassend mindestens einen Titrand und mindestens einen pH-Indikator; Messung mindestens einer optischen Eigenschaft einer Titrationslösung, welche sich in einem Auffanggefäss befindet; Automatisiertes Beenden der Titration bei Erreichen eines vorbestimmten Äquivalenzpunkts, welcher einem Wert des optischen Signals entspricht, der eine äquimolare Bedingung der Titrationslösung im Auffanggefäss repräsentiert, wobei die Informationen betreffend den Äquivalenzpunkt in einer Speicherreinheit gespeichert und daraus ausgelesen werden.

## Beschreibung

Die Erfindung betrifft ein Verfahren zur kolorimetrischen Titration für die Stickstoffbestimmung sowie eine Titrationsanordnung gemäss dem Oberbegriff der unabhängigen Patentansprüche.

Die Kjeldahlsche Stickstoffbestimmung ist eine quantitative, häufig verwendete Bestimmungsmethode des organischen Stickstoffgehaltes einer Probe. Beim klassischen Vorgehen wird eine abgemessene Probemenge mit Schwefelsäure und einem Katalysator in einem Probenglas bei ca. 420°C aufgeschlossen. Die organischen Anteile einer Probe werden zerstört und der Stickstoff der Probe dabei in Ammoniumsulfat umgewandelt. Vor der Destillation wird die Aufschlusslösung mit destilliertem Wasser verdünnt und dann mit Natronlauge alkalisiert, um Ammoniak freizusetzen. Der Ammoniak wird mit Wasserdampf destilliert und in einer sauren Vorlagelösung aufgefangen und titrimetrisch bestimmt. Durch den Ammoniak, welches in saurer Vorlagelösung aufgefangen wird, steigt der pH-Wert in der sauren Vorlagelösung. Die Bestimmung des Stickstoffgehaltes erfolgt mittels Säuretitration bspw. der Boratkomplexe. Dabei sinkt der pH-Wert wieder. Sobald der ursprüngliche pH-Wert erreicht wurde, befindet man sich am Äquivalenzpunkt und die Titration endet. An diesem Punkt wurde genau so viel Säure zugegeben wie Ammoniak bzw. Stickstoff vorhanden ist (äquimolar). Somit lässt sich über das hinzutitrierte Volumen der Stickstoffgehalt der Probe berechnen. Von diesem Wert wird das Säure-Titrationsvolumen eines Blindwertes abgezogen, da auch das destillierte Wasser einen Effekt auf den pH-Wert der sauren Vorlage hat.

Bei der potentiometrischen Titration ist der Endpunkt bekannt, da es sich dabei um den ursprünglich eingestellten pH-Wert der Borsäure handelt. Dieser bekannte pH-Wert wird als Endpunkt für die Titration eingesetzt. Die Titration endet also am bekannten Äquivalenzpunkt bzw. am entsprechenden pH-Wert. Entsprechend spricht man von einer Endpunkttitration. Da der Endpunkt bekannt ist, lässt sich dieser durch die dynamische Variation der Zugabemenge des Titrationsmittels schnell ansteuern. Der pH-Wert der Vorlage lässt sich anhand eines kommerziell erhältlichen pH-Meters messen.

Bei der kolorimetrischen Titration wird der Äquivalenzpunkt optisch anhand des Farbumschlages des zugegebenen Indikators gemessen, welcher in einer bestimmten Konzentration der Borsäurevorlage beigemischt wird. Der Indikator reagiert mittels Farbumschlag auf den pH-Wert der vorgelegten Säure. Photometrische Sensoren übersetzen den Farbton in ein elektrisches Signal. Bisher handelte es sich bei der kolorimetrischen Titration um eine monotone Äquivalenzpunkttitration. Bei dieser Titration wird immer die gleiche Menge an Titrationsmittel zur Borsäure zugegeben. Um die zusätzliche Zugabe an Titrationsmittel so gering wie möglich zu halten, werden die monotonen Titrationsschritte möglichst klein gewählt. Aufgrund der kleinen Schrittgrösse dauert die Titration lang und ist anfällig für Störeinflüsse.

WO 2014/117868 A1 beschreibt eine Vorrichtung sowie ein Verfahren zur Titration für Analysen nach Kjeldahl. Zur Endpunktbestimmung der Titration wird ein pH-Indikator verwendet und transmittiertes Licht einer ersten und einer zweiten Wellenlänge gemessen. Diese werden mit einem Zielwert verglichen und die Titration durch das Verhältnis der Intensitäten der gemessen zwei Wellenlängen gesteuert.

Aufgabe der Erfindung ist es die Nachteile des Stands der Technik zu überwinden. Insbesondere ist es Aufgabe der Erfindung ein kolorimetrisches Titrationsverfahren und eine Vorrichtung zur Verfügung zu stellen, welches zeiteffiziente Analysen mit hoher Analysegenauigkeit ermöglicht.

Diese Aufgaben werden durch die Merkmale der unabhängigen Ansprüche gelöst.

Die Erfindung betrifft ein Verfahren zur Titration umfassend die folgenden Schritte: a. Zugeben eines Titrationsmittels zu einer Titrationslösung umfassend mindestens einen Titrand und mindestens einen pH-Indikator; b. Messung mindestens einer optischen Eigenschaft einer Titrationslösung, welche sich in einem Auffanggefäss befindet; c. automatisiertes Beenden der Titration bei Erreichen eines vorbestimmten Äquivalenzpunkts, welcher einem Wert des optischen Signals entspricht, der eine äquimolaren Bedingung der Titrationslösung im Auffanggefäss repräsentiert, wobei Informationen betreffend den Äquivalenzpunkt in einer Speichereinheit gespeichert sind und daraus ausgelesen werden. Auf diese Weise wird die Titration mit Erreichen des vorbestimmten Äquivalenzpunkts beendet, was die Durchführung der Titration beschleunigt. Ein Übertitrieren ist nicht erforderlich. Das elektrische Signal kann mittels eines optischen, insbesondere eines photometrischen Sensors ermittelt werden. Hier und im Folgenden wird unter dem Äquivalenzpunkt der Wert des optischen Signals am Wendepunkt der Signalkurve verstanden. Der Begriff "äquimolare Bedingung der Titrationslösung" bedeutet das äquimolare Verhältnis von Titrationsmittel und Titrand, insbesondere Base, der Titrationslösung im Auffanggefäss. Der Wendepunkt ist allgemein erreicht, wenn die zweite Ableitung der Signalkurve gleich null ist. Die äquimolare Bedingung der Titrationslösung repräsentiert den Umschlagspunkt des pH-Indikators. Der Äquivalenzpunkt, bzw. Informationen, die den Äquivalenzpunkt definieren, ist gespeichert, wird jedoch regelmässig, beispielsweise täglich, bestimmt und gespeichert. Die optische Eigenschaft der Titrationslösung am Wendepunkt kann sich im Laufe der Zeit ändern, z.B. aufgrund der Alterung des pH-Indikators. Durch regelmässiges Bestimmen und Speicherung des Äquivalenzpunkts wird sichergestellt, dass der Wendepunkt auch bei geänderten optischen Eigenschaften zuverlässig erkannt werden kann.

Der gespeicherte Äquivalenzpunkt, bzw. die den Äquivalenzpunkt definierenden Informationen, kann ausgelesen werden. Unter Erreichen eines vorbestimmten Äquivalenzpunktes wird hier und im Folgenden verstanden, dass die Differenz zwischen Signal der Messung und dem Äquivalenzpunkt kleiner/gleich einer bestimmten Differenz ist. Die Messung kann bei einer Wellenlänge zwischen 200 bis 3000 nm, bevorzugt 470 bis 660 nm, besonders bevorzugt 500 bis 630 nm erfolgen. Besonders bevorzugt kann die Messung bei einer Wellenlänge von 610 nm erfolgen.

Die optische Eigenschaft kann ausgewählt sein aus der Gruppe Farbton, Farbintensität, Farbabsorption. Beispielsweise kann der Farbton der Indikatorlösung anhand der Intensität eines vom Sensor empfangenen Lichtstrahls bekannter Wellenlänge bestimmt werden. Daraus lässt sich auf die Absorptions- bzw. Farbeigenschaften der Indikatorlösung schliessen.

Die mindestens eine optische Eigenschaft der Titrationslösung kann periodisch oder kontinuierlich gemessen werden. Auf diese Weise kann das Verfahren gegebenen Anforderungen angepasst werden.

Des Weiteren kann die Zugabemenge des Titrationsmittels von einer Rechneranordnung mit einem Annähern an den vorbestimmten Äquivalenzpunkts, insbesondere schrittweise, angepasst, insbesondere verringert, werden. So werden beispielsweise zunächst grössere Mengen Titrationsmittel zugegeben, womit ein schnelles Anfahren des vorbestimmten Äquivalenzpunktes erreicht wird. Anschliessend werden die Zugabemengen verringert, so dass der vorbestimmte Äquivalenzpunkt langsam und kontrolliert angefahren werden kann. Das Zugabevolumen des Titrationsmittels kann abhängig von der Steilheit der Signalkurve variieren. Dabei werden normalerweise konstante Messwertänderungen angestrebt. Ist die Steigung der Signalkurve beispielsweise gering, so kann pro Dosierung 0.1 mL Titrationsmittel hinzugegeben werden. Nimmt die Steigung der Signalkurve zu, so kann das Zugabevolumen auf 0.04 mL verringert werden. Kurz vor Erreichen des vorbestimmten Äquivalenzpunktes kann das Zugabevolumen auf 0.02 mL verringert werden. Auf diese Weise wird ein Übertitrieren vermieden und Titrationsmittel eingespart. Die Zugabemenge des Titrationsmittels kann von der Steuereinheit sowohl konstant gehalten als auch dynamisch angepasst werden. Dabei kann durch eine derart variable Zugabemenge der vorbestimmte Äquivalenzpunkt schnell angefahren werden.

Von der Rechneranordnung kann das optische Messsignal mit dem ermittelten Messsignal am vorbestimmten Äquivalenzpunkt abgeglichen werden, die Zugabemenge des Titrationsmittels mittels des Abgleichs des Signals und dem vorbestimmten Äquivalenzpunkt angepasst, insbesondere verringert, werden und bei Erreichen des vorbestimmten Äquivalenzpunkts die Titration beendet werden. Dazu kann ein Algorithmus in der Rechneranordnung bereitgestellt bzw. implementiert sein. Derart ist das Verfahren zeit- und kosteneffizient durchführbar. Insbesondere ist das Verfahren unabhängig von Entscheidungen eines Anwenders durchführbar und damit weniger fehleranfällig bei gleicher oder sogar besserer Genauigkeit.

Des Weiteren kann in dem erfindungsgemässen Verfahren eine, insbesondere vorbehandelte, Probe vor dem Schritt a. oder gleichzeitig mit dem Schritt b. in die Titrationslösung gegeben, insbesondere mittels Destillation überführt, werden. Mittels der letzteren Alternative kann das Verfahren weiter verkürzt werden, da so die Destillation der Probe und die Titration gleichzeitig oder zeitlich überlappend stattfindet.

Des Weiteren kann für das erfindungsgemässe Verfahren der pH-Indikator ausgewählt sein aus der Gruppe Bromkresolgrün, Methylrot; Bromkresolgrün-Methylrot-Mischindikator; Sher-Mischindikator. Der Sher-Mischindikator ist ursprünglich beschrieben in "Two-Step Mixed Indicator for Kjeldahl Nitrogen Titration", Irving H. Sher, (Analytical Chemistry, 27 (5), pp 831-832 1955). Selbstverständlich können auch Derivate der vorgenannten Indikatoren eingesetzt werden.

Ein weiterer Aspekt der Erfindung betrifft ein Verfahren zur Bestimmung eines Äquivalenzpunkts für eines der vorgenannten Verfahren, umfassend die folgenden Schritte: a. Destillation von einem Gemisch, insbesondere umfassend Wasser und eine Base, insbesondere NaOH, aus einem Destillationsgefäss in ein Auffanggefäss, wobei das Auffanggefäss nach der Destillation eine Titrationslösung umfassend eine Säure, insbesondere Borsäure, pH-Indikator und Wasser aufweist; b. Titrieren und kolorimetrische Messung einer optischen Eigenschaft der Titrationslösung des Auffanggefässes mittels eines optischen, insbesondere photometrischen, Sensors; c. Bestimmung eines Äquivalenzpunkts, welcher einem Wert des optischen Signals entspricht, der eine äquimolare Bedingung der Titrationslösung im Auffanggefäss repräsentiert; d. optionales ein- oder mehrmaliges Wiederholen der Schritte a. bis c. zur Bestimmung eines oder mehrerer weiterer Äquivalenzpunkte. Danach wird ein zuletzt bestimmter Äquivalenzpunkt in einer Speichereinheit gespeichert. Der Äquivalenzpunkt als Wendepunkt der Signalkurve ist wie vorgängig beschrieben definiert und wird derart für die vorgängig beschriebenen Verfahren zur Verfügung gestellt. Des Weiteren kann auf dieses Weise der Äquivalenzpunkt eines Systems charakterisiert werden, was besonders vorteilhaft ist, da die eingesetzten Chemikalien, beispielsweise der pH-Indikator, einen Alterungsprozess durchlaufen. Ein Äquivalenzpunkt kann sich somit mit der Zeit ändern, weshalb eine periodische z.B. tägliche Bestimmung und Verwendung eines entsprechend bestimmten, aktualisierten Äquivalenzpunkts zur Genauigkeit und Verlässlichkeit der Bestimmungsverfahren beiträgt.

Ein Äquivalenzpunkt gilt als zuverlässig bestimmt und kann gespeichert werden, wenn der zuletzt bestimmte Äquivalenzpunkt zum vorhergehend bestimmten Äquivalenzpunkt um weniger als ein bestimmter Differenzwert abweicht. Ein exemplarischer Richtwert des Differenzwerts kann 2.5 % sein. Selbstverständlich kann auch ein bestimmter Äquivalenzpunkt mit einem grösseren Unterschied zum vorhergehenden Äquivalenzpunkt gespeichert und verwendet werden

Ein weiterer Aspekt der Erfindung betrifft ein Verfahren zur kolorimetrischen Titration zur Bestimmung von Stickstoff nach Kjeldahl. Das Verfahren umfasst die Schritte: a. optional Aufschliessen einer Probe in einem Probengefäss; b. Transfer der Probe in ein Destillationsgefäss; c. Destillation in ein Auffanggefäss aufweisend eine Titrationslösung umfassend eine Säure, insbesondere Borsäure, pH-Indikator und Wasser; d. Messung mindestens einer optischen Eigenschaft der Lösung im Auffangefäss mittels eines optischen, insbesondere photometrischen, Sensors; e. Zugeben des Titrationsmittels zur Titrationslösung; f. Automatisiertes Beenden der Titration bei Erreichen eines vorbestimmten Äquivalenzpunkts, welcher einem Wert des optischen Signals entspricht, der eine äquimolare Bedingung der Titrationslösung im Auffanggefäss repräsentiert. Dabei sind Informationen betreffend den Äquivalenzpunkt in einer Speichereinheit gespeichert und werden zur Ermittlung, ob der Äquivalenzpunk erreicht ist, ausgelesen. Auf diese Weise wird ein Verfahren zur Verfügung gestellt, welches die Bestimmung nach Kjeldahl mittels eines wie vorgängig bestimmten Äquivalenzpunkts, insbesondere als maximale Signaländerung, ermöglicht. Dieses Verfahren ist besonders zeiteffizient und kostengünstig.

Im vorgängig beschriebenen Verfahren kann vor der Messung einer Probe eine oder mehrere Blindproben umfassend die Aufschlussmatrix gemessen werden. Dabei wird das Ergebnis der einen oder werden die gemittelten Ergebnisse der mehreren Blindproben bei der Bestimmung des Stickstoffgehalts der Probe abgezogen. Üblicherweise werden drei Blindwerte gemessen, gemittelt und für die Berichtigung der Bestimmung der Probe berücksichtigt. Auf diese Weise wird der Einfluss der Aufschlussmatrix auf die Bestimmung der Probe nivelliert. Alternativ kann auch ein zu berücksichtigender Blindwert vom Anwender vorgegeben werden.

Ein weiterer Aspekt der Erfindung betrifft eine Titrationsanordnung. Die Titrationsanordnung umfasst eine Einheit zum Messen einer optischen Eigenschaft einer Titrationslösung und zur Erzeugung eines Signals, welches dem Wert der optischen Eigenschaft entspricht. Weiter ist eine Speichereinheit umfasst. In der Speichereinheit ist ein vorbestimmter Äquivalenzpunkt, welcher einem Wert des optischen Signals entspricht, der eine äquimolare Bedingung der Titrationslösung repräsentiert, gespeichert oder speicherbar. Ebenso können Informationen die den Äquivalenzpunkt charakterisieren, definieren bzw. diesen betreffen, beispielsweise eine vorbestimmte Signalintensität, gespeichert oder speicherbar sein. Die Titrationsanordnung umfasst des Weiteren eine Rechneranordnung. Diese ist derart ausgestaltet, dass die Rechneranordnung Titrationsmittel zur Titrationslösung zugibt, wenn das Signal eine Differenz zum Äquivalenzpunkt aufweist, die grösser als ein vorbestimmter Wert ist, und die Titration automatisiert beendet, wenn das Signal eine Differenz zum Äquivalenzpunkt aufweist, die kleiner/gleich dem vorbestimmten Wert ist. Auf diese Weise wird eine Titrationsanordnung zur Ausführung der vorgängig beschriebenen Verfahrensschritte zur Verfügung gestellt. Mittels der Rechneranordnung wird eine vorteilhafte Titrationsanordnung bereitgestellt, mit welcher eine kolorimetrische Titration zur Bestimmung von Stickstoff nach Kjeldahl mit einem vorbestimmten Äquivalenzpunkt zeit- und kosteneffizient durchführbar ist.

Des Weiteren kann die Titrationsanordnung eine Destillationsvorrichtung zur Durchführung einer Destillation, insbesondere zur Stickstoffbestimmung nach Kjeldahl, aufweisen. Zusätzlich kann ein Destillationsgefäss umfasst sein, welches vor oder zu Beginn einer Destillation ein Gemisch aufweist. Dieses Gemisch kann insbesondere Wasser und eine Stickstoffverbindung, insbesondere NH₃ einer insbesondere vorbehandelten Probe, aufweisen. Die Titrationsanordnung kann weiter ein Auffanggefäss aufweisen, wobei das Auffanggefäss nach Beendigung einer Destillation eine Titrationslösung aufweist. Die Titrationslösung weist hierbei einen Titrand, bevorzugt NH₃, pH-Indikator und Wasser auf. Des Weiteren kann die Titrationslösung eine Säure, insbesondere Borsäure, enthalten. Derart sind die vorgenannten Verfahrensschritte zur kolorimetrischen Titration zur Bestimmung von Stickstoff nach Kjeldahl mit der vorbeschriebenen Titrationsanordnung zeit- und kosteneffizient durchführbar.

Nachfolgend werden exemplarische Ausführungsbeispiele anhand von Figuren näher beschrieben.

Es zeigen:
- Figur 1:: Ein Signalverlauf einer Messung mit dem erfindungsgemässen kolorimetrischen Verfahren;
- Figur 2:: Ein Signalverlauf einer Messung mit dem erfindungsgemässen kolorimetrischen Verfahrens im online-Modus;
- Figur 3:: Flussdiagramm des erfindungsgemässen Verfahrens;
- Figur 4:: Schematische Darstellung der erfindungegmässen Titrationsanordnung,
- Figur 5:: Signalverlauf einer erfindungsgemässen Bestimmung eines Äquivalenzpunkts.

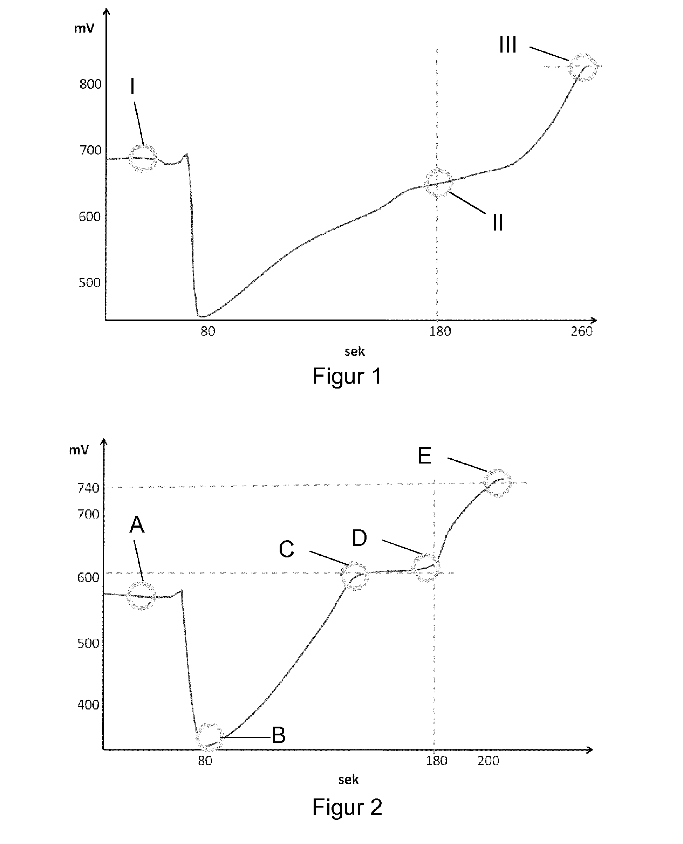

Figur 1 zeigt einen Signalverlauf einer Messung mit dem erfindungsgemässen Verfahren zur Bestimmung von Stickstoff einer Probe nach Kjeldahl. Das Verfahren wird hierbei mit einer Titrationsanordnung umfassend eine Destillationsvorrichtung durchgeführt. Die Titrationsanordnung weist eine Einheit in der Form eines Mikroprozessors auf, in welcher ein bestimmter Äquivalenzpunkt, bzw. Informationen, die den Äquivalenzpunkt definieren oder betreffen. Der vorbestimmte Äquivalenzpunkt ist insbesondere definiert als ein Wert des optischen Signals, der eine äquimolare Bedingung der Titrationslösung im Auffanggefäss repräsentiert. Definiert. Die Informationen zum Äquivalenzpunkt sind in der Speichereinheit gespeichert. Im dargestellten Signalverlauf ist die mit einem photometrischen Sensor gemessene Farbintensität der Titrationslösung als elektrisches Potential (mV) gegen die Zeit (sek) aufgetragen. Der Sensor ist ein photometrischer Sensor (bspw. Spectrosens von Methrom AG oder Optrode von Metrohm AG). Die Farbintensität wird kontinuierliche vom photometrischen Sensor gemessen und in ein elektrisches Signal übersetzt. Der Stickstoff einer Probe wird als Ammoniak mittels Destillation mit dem Destillationsstart I in das Auffanggefäss überführt. Das Auffanggefäss umfasst die Titrationslösung, welche Borsäure, Sher-Mischindikator und Wasser aufweist. Nach Erreichen eines minimalen Potentials von ca. 450 mV nach ca. 80 sek steigt die Spannung an und erreicht nach ca. 180 sek ein Plateau, was das Ende der Destillation charakterisiert. Mit Ablauf der Destillation II startet die Titration mittels Zugabe eines Titrationsmittels. Das Zugabevolumen des Titrationsmittels variiert abhängig von der Steilheit der Signalkurve. Ist die Steigung der Signalkurve gering, so werden pro Dosierung 0.1 mL Titrationsmittel zugegeben. Nimmt die Steigung der Signalkurve zu, so verringert sich das Zugabevolumen auf 0.04 mL. Kurz vor Erreichen des vorbestimmten Äquivalenzpunktes verringert sich das Zugabevolumen nochmals auf 0.02 mL. Während der Titration wird das Signal des Messwertes kontinuierlich mit dem vorbestimmten Äquivalenzpunkt verglichen. Dazu wird der vorbestimmte und in der Speicher-/Steuereinheit gespeicherte Äquivalenzpunkt, bzw. die den Äquivalenzpunkt definierenden bzw. beschreibenden Informationen, ausgelesen. Eine Rechneranordnung vergleicht das Signal der Messwerte mit dem vorbestimmten Äquivalenzpunkt. Mit Erreichen des vorbestimmten Äquivalenzpunkts, wobei das Signal der Messwerte dem vorbestimmten Äquivalenzpunkt, bzw. den vorgenannten Informationen, entsprechen, hier bei ca. 820 mV und 260 sek, endet die Titration. Über die zugeführte Menge des Titrationsmittels lässt sich im Anschluss die Stickstoffmenge der Probe bestimmen.

Figur 2 zeigt einen Signalverlauf einer Messung mit dem erfindungsgemässen Verfahren zur Bestimmung von Stickstoff einer Probe nach Kjeldahl im online-Modus. Unter online-Modus wird verstanden, dass die Destillation und die Titration zumindest partiell gleichzeitig durchgeführt werden. Dies bedeutet, dass die Titration zeitversetzt und partiell gleichzeitig mit der Destillation durchgeführt wird oder mit dem Start der Destillation beginnt. Derart wird die Dauer des Verfahrens deutlich verkürzt. Das Verfahren wird hierbei ebenfalls mit einer Titrationsanordnung umfassend eine Destillationsvorrichtung durchgeführt. Die Titrationsanordnung weist die gleichen Merkmale wie für Figur 1 erläutert auf. Der Signalverlauf ist als elektrisches Potential (mV) gegen die Zeit (sek) der gemessene Farbintensität der Titrationslösung aufgetragen. Die Farbintensität wird kontinuierlich vom photometrischen Sensor gemessen und in ein elektrisches Signal übersetzt. Der Stickstoff einer Probe wird als Ammoniak mittels Destillation mit dem Destillationsstart A in das Auffanggefäss überführt. Das Auffanggefäss umfasst die Titrationslösung, welche Borsäure, Sher-Mischindikator und Wasser aufweist. Mit Erreichen B einer minimalen Spannung von ca. 450 mV nach ca. 80 sek wird die Titration gestartet mittels Zugabe eines Titrationsmittels, worauf die Spannung ansteigt. Das Zugabevolumen des Titrationsmittels variiert abhängig von der Steilheit der Signalkurve. Ist die Steigung der Signalkurve beispielsweise gering, so werden pro Dosierung 0.1 mL Titrationsmittel zugegeben. Nimmt die Steigung der Signalkurve zu, so verringert sich das Zugabevolumen auf 0.04 mL. Kurz vor Erreichen des vorbestimmten Äquivalenzpunktes verringert sich das Zugabevolumen auf 0.02 mL. Während der Titration wird das Signal des Messwertes kontinuierlich mit dem vorbestimmten Äquivalenzpunkt verglichen. Dazu wird der vorbestimmte und in der Speicher-/Steuereinheit gespeicherte Äquivalenzpunkt, bzw. die den Äquivalenzpunkt definierenden bzw. beschreibenden Informationen, ausgelesen. Eine Rechneranordnung vergleicht das Signal der Messwerte mit dem vorbestimmten Äquivalenzpunkt. Bei Erreichen C einer Spannung, die als Differenzwert zu der am bestimmten Äquivalenzpunkt entsprechenden Spannung definiert ist, pausiert die Titration, um ein Übertitrieren zu vermeiden. Der Differenzwert ist beispielsweise als delta -140 mV von dem bestimmten Äquivalenzpunkt definiert. Mit dem Ende D der Destillation setzt die Titration wieder ein. Die Titration erfolgt nun mit verringerten Zugabemengen des Titrationsmittels, wie vorgängig beschrieben. Mit Erreichen des bestimmten Äquivalenzpunkts, wobei das Signal der Messwerte dem vorbestimmten Äquivalenzpunkt, bzw. den vorgenannten Informationen, entsprechen, hier bei ca. 740 mV und 200 sek, endet die Titration. Über die zugeführte Menge Titrationsmittels lässt sich im Anschluss die Stickstoffmenge der Probe bestimmen.

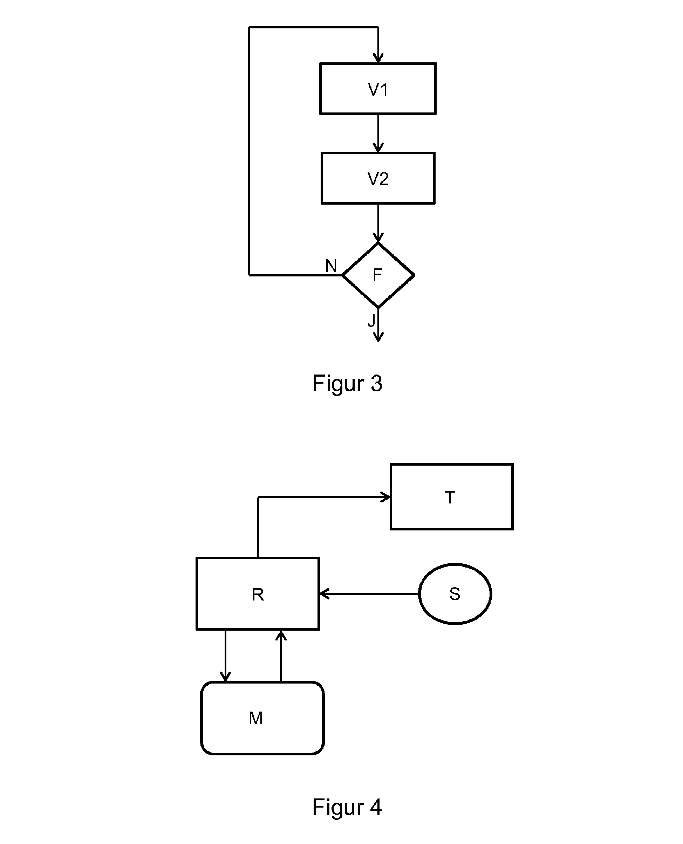

Figur 3 zeigt ein Flussdiagramm zur Entscheidungsfindung im erfindungsgemässen Verfahren, wobei festgestellt wird, ob ein vorbestimmter Äquivalenzpunkt erreicht ist und die Titration beendet wird (vgl. Figur 1). Die Schritte Auslesen V1, Vergleichen V2 und Entscheidung F sind gezeigt. Der vorbestimmte Äquivalenzpunkt, bzw. die Informationen zum Äquivalenzpunkt, wird aus der Speichereinheit ausgelesen V1. Das Signal des Messwerts wird mit den ausgelesenen Informationen zum Äquivalenzpunkt, verglichen V2. Sind diese nahezu identisch, wobei eine tolerierbare Abweichung in der Speichereinheit hinterlegt und berücksichtigt werden kann, so wird die Titration beendet (Der Abgleich ist positiv; gezeigt mit Bezugszeichen J). Sind das Signal des Messwerts und die Informationen zum vorbestimmten Äquivalenzpunkt nicht nahezu identisch (Der Abgleich ist negativ; gezeigt mit Bezugszeichen N), im Sinne von ausserhalb eines vordefinierten Bereichs, so wird die Titration fortgeführt und ein weiterer Messwert gemessen und verglichen. Nach dem gleichen Prinzip kann im online-Modus auch das Erreichen eines vorbestimmten Differenzwertes (bspw. delta = -140 mV) vom Äquivalenzpunkt festgestellt werden, um die Titration temporär zu unterbrechen (vgl. Figur 2).

Figur 4 zeigt eine erfindungsgemässe Titrationsanordnung. Gezeigt sind jedoch die Elemente Rechneranordnung R, Speicher M im Sinne der Speichereinheit und ein optischer Sensor S. Die Rechneranordnung R liest Informationen, bspw. Signalintensität, betreffend einen vorbestimmten Äquivalenzpunkt aus dem Speicher M aus; kann aber auch derartige Informationen in den Speicher M ablegen. Mit einem vom Sensor S in die Rechneranordnung R eingehenden Signal eines Messwerts werden das Signal des Messwerte mit den Informationen betreffend den Äquivalenzpunkt verglichen. Die Rechneranordnung R, insbesondere ein in der Rechnereinheit R implementierter Algorithmus (nicht gezeigt), kann auf die Titration T derart Einfluss nehmen, dass die Titration T fortgeführt wird, also Titrationsmittel zur Titrationslösung hinzugegeben wird, wenn das Signal eine Differenz zum Äquivalenzpunkt aufweist, die grösser als ein vorbestimmter Wert ist, und dass die Titration automatisiert beendet, wenn das Signal eine Differenz zum Äquivalenzpunkt aufweist, die kleiner/gleich dem vorbestimmten Wert ist..

Im online-Modus (vgl. Figur 2) kann beispielsweise das Erreichen eines Differenzwertes (bspw. delta = -140mV) vom Äquivalenzpunkt zur temporären Unterbrechung der Titration T festgestellt werden. Dazu wird das Signal des Messwerts mit den vorbestimmten, in dem Speicher M abgelegten Informationen zum Differenzwert vom Äquivalenzpunkt mittels der Rechneranordnung R verglichen und wie vorgängig erläutert die Titration T fortgeführt oder beendet werden.

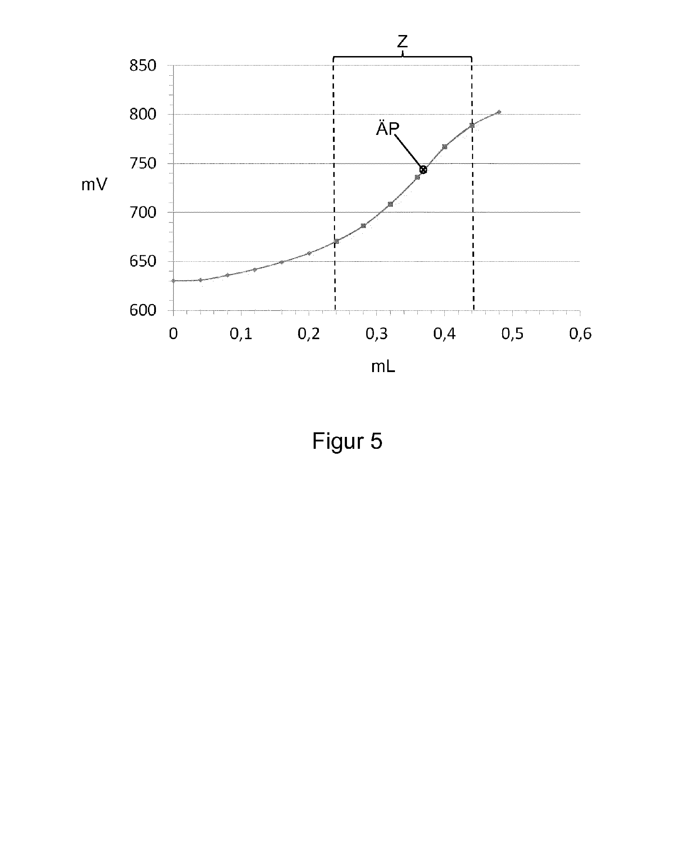

Figur 5 zeigt einen Signalverlauf einer erfindungsgemässen Bestimmung eines Äquivalenzpunkts ÄP. Hierbei wird eine Titrationsanordnung umfassend eine Destillationsvorrichtung verwendet. Die Titrationsanordnung weist des Weiteren eine Speichereinheit in der Form eines Mikroprozessors auf. Der Äquivalenzpunkt, bzw. die den Äquivalenzpunkt ÄP betreffenden bzw. definierenden Informationen, wird in einer Titration ermittelt. Dazu umfasst die Titrationslösung Borsäure, pH-Indikator und Wasser. Eine Probe bzw. ein Probenanteil ist in der Titrationslösung für die Bestimmung des Äquivalenzpunkts ÄP nicht enthalten. Die Absorption der Titrationslösung wird gemessen und in ein elektrisches Signal übersetzt. Das elektrische Signal (mV) ist gegen das titrierte Volumen (mL) dargestellt, bzw. eine Reihe von Messpunkten ist mittels elektrischer Signalwerte gegen das titrierte Volumen dargestellt. Für die Bestimmung des Äquivalenzpunkts ÄP wird der Bereich Z der Signalkurve interpoliert und der Wendepunkt der Signalkurve bestimmt. Der Wendepunkt ist der Punkt des interpolierten Bereichs Z, in welchem die zweite Ableitung gleich null ist. Der Wendepunkt entspricht dabei dem Farbumschlag des pH-Indikators. Das Signal am Wendepunkt definiert den Äquivalenzpunkt ÄP. Der Wert des Signals von 740 mV am Wendepunkt, welches den Äquivalenzpunkt ÄP definiert bzw. betrifft, wird in der Speichereinheit abgespeichert. Die derart ermittelten und abgespeicherten Informationen werden bei Titrationen von Proben, insbesondere zur Stickstoffbestimmung, und Blindwertmessungen verwendet.

## Patentansprüche

1. Verfahren zur Titration umfassend die Schritte
a. Zugeben eines Titrationsmittels zu einer Titrationslösung umfassend mindestens einen Titrand und mindestens einen pH-Indikator;
b. Messung mindestens einer optischen Eigenschaft einer Titrationslösung, welche sich in einem Auffanggefäss befindet;
c. Automatisiertes Beenden der Titration bei Erreichen eines vorbestimmten Äquivalenzpunkts, welcher einem Wert des optischen Signals entspricht, der eine äquimolare Bedingung der Titrationslösung im Auffanggefäss repräsentiert, wobei die Informationen betreffend den Äquivalenzpunkt in einer Speichereinheit gespeichert und daraus ausgelesen werden.

2. Verfahren gemäss Anspruch 1, wobei die optische Eigenschaft ausgewählt ist aus der Gruppe Farbton, Farbintensität, Farbabsorption.

3. Verfahren gemäss Anspruch 1 oder 2, wobei die mindestens eine optische Eigenschaft der Titrationslösung periodisch oder kontinuierlich gemessen wird.

4. Verfahren gemäss einem der Ansprüche 1 bis 3, wobei die optische Messung periodisch oder kontinuierlich in eine elektrische Spannung übersetzt wird.

5. Verfahren gemäss einem der Ansprüche 1 bis 4, wobei die Zugabemenge des Titrationsmittels von einer Rechneranordnung mit einem Annähern des vorbestimmten Äquivalenzpunkts, insbesondere schrittweise, angepasst, insbesondere verringert, wird.

6. Verfahren gemäss Anspruch 5, wobei von der Rechneranordnung
- das elektrische Signal des Messwerts mit dem vorbestimmten Äquivalenzpunkt abgeglichen wird,
- die Zugabemenge des Titrationsmittels mittels des Abgleichs des elektrischen Signals des Messwerts und dem vorbestimmten Äquivalenzpunkt angepasst, insbesondere verringert wird, und
- bei Erreichen des vorbestimmten Äquivalenzpunkts die Titration beendet wird.

7. Verfahren gemäss einem der Ansprüche 1 bis 6, wobei eine, insbesondere vorbehandelte, Probe
- vor dem Schritt a. oder
- gleichzeitig mit dem Schritt b.
in die Titrationslösung gegeben, insbesondere mittels Destillation überführt, wird.

8. Verfahren gemäss einem der Ansprüche 1 bis 7, wobei der pH-Indikator ausgewählt ist aus der Gruppe Bromkresolgrün, Methylrot; Bromkresolgrün-Methylrot-Mischindikator; Sher-Mischindikator.

9. Verfahren zur Bestimmung eines Äquivalenzpunkts für ein Verfahren gemäss einem der Ansprüche 1 bis 8, umfassend die Schritte
a. Destillation von einem Gemisch, insbesondere umfassend Wasser und Base, insbesondere NaOH, aus einem Destillationsgefäss in ein Auffanggefäss, wobei das Auffanggefäss nach der Destillation eine Titrationslösung umfassend eine Säure, insbesondere Borsäure, pH-Indikator und Wasser aufweist;
b. Titrieren und kolorimetrische Messung einer optischen Eigenschaft der Titrationslösung des Auffanggefässes mittels eines optischen, insbesondere photometrischen, Sensors;
c. Bestimmung eines Äquivalenzpunkts, welcher einem Wert des optischen Signals entspricht, der eine äquimolare Bedingung der Titrationslösung im Auffanggefäss repräsentiert;
d. Optional ein- oder mehrmaliges Wiederholen der Schritte a. bis c. zur Bestimmung eines oder mehrerer weiterer Äquivalenzpunkte;
wobei ein zuletzt bestimmter Äquivalenzpunkt in einer Speichereinheit gespeichert wird.

10. Verfahren zur kolorimetrischen Titration zur Bestimmung von Stickstoff nach Kjeldahl, umfassend die Schritte
a. optional Aufschliessen einer Probe in einem Probengefäss;
b. Transfer der Probe in ein Destillationsgefäss;
c. Destillation in ein Auffanggefäss aufweisend eine Titrationslösung umfassend eine Säure, insbesondere Borsäure, pH-Indikator und Wasser;
d. Messung mindesten einer optischen Eigenschaft der Lösung im Auffangefäss mittels eines optischen, insbesondere photometrischen, Sensors;
e. Zugeben des Titrationsmittels zur Titrationslösung;
f. Automatisiertes Beenden der Titration bei Erreichen eines vorbestimmten Äquivalenzpunkts, welcher einem Wert des optischen Signals entspricht, der eine äquimolare Bedingung der Titrationslösung im Auffanggefäss repräsentiert, wobei die Informationen betreffend den Äquivalenzpunkt in einer Speichereinheit, insbesondere gemäss Anspruch 9, gespeichert sind, ausgelesen und verglichen werden.

11. Verfahren gemäss Anspruch 10, wobei vor der Messung einer Probe eine oder mehrere Blindproben umfassend die Aufschlussmatrix gemessen werden, wobei das Ergebnis der einen Blindprobe bei der Bestimmung der Probe abgezogen wird oder das gemittelte Ergebnis der mehreren Blindproben bei der Bestimmung der Probe abgezogen wird.

12. Titrationsanordnung umfassend
- eine Einheit zum Messen einer optischen Eigenschaft einer Titrationslösung und zur Erzeugung eines Signals, welches dem Wert der optischen Eigenschaft entspricht,
- eine Speichereinheit, in welcher ein vorbestimmter Äquivalenzpunkt, welcher einem Wert des optischen Signals entspricht, der eine äquimolare Bedingung der Titrationslösung repräsentiert, gespeichert oder speicherbar ist,
- eine Rechneranordnung, welche derart ausgestaltet ist, dass die Rechneranordnung Titrationsmittel zur Titrationslösung zugibt, wenn das Signal eine Differenz zum Äquivalenzpunkt aufweist, die grösser als ein vorbestimmter Wert ist, und
die Titration automatisiert beendet, wenn das Signal eine Differenz zum Äquivalenzpunkt aufweist, die kleiner/gleich dem vorbestimmten Wert ist.

13. Titrationsanordnung gemäss Anspruch 12 weiter umfassend
- eine Destillationsvorrichtung,
- ein Destillationsgefäss, welches vor oder zu Beginn einer Destillation ein Gemisch, welches insbesondere Wasser und eine Stickstoffverbindung, insbesondere NH₃ einer insbesondere vorbehandelten Probe, aufweist, und
- ein Auffanggefäss, wobei das Auffanggefäss nach Beendigung einer Destillation eine Titrationslösung umfassend einen Titrand, bevorzugt NH₃, pH-Indikator und Wasser aufweist.
